# EUROPÄISCHE PATENTANMELDUNG

(11) **EP 4 194 377 A1**
(43) Veröffentlichungstag der Anmeldung: **14.06.2023**
(21) Anmeldenummer: 22205512.1
(22) Anmeldetag: 04.11.2022
(51) Int. Cl.: B65G 49/04

(54) **TRAGVORRICHTUNG, FÖRDERANLAGE UND BEHANDLUNGSANLAGE FÜR FAHRZEUGRÄDER**

(30) Priorität: 08.12.2021 DE 102021132271
(71) Anmelder: Eisenmann GmbH, 71032 Böblingen (DE)
(72) Erfinder: Rau, Thomas, 71032 Böblingen (DE)
(74) Vertreter: Ostertag & Partner Patentanwälte mbB

(57) **Zusammenfassung**

Eine Tragvorrichtung für Fahrzeugräder (14), insbesondere für eine Förderanlage (12) zum Fördern von Fahrzeugrädern (14) durch eine Behandlungsanlage (16), insbesondere durch eine Beschichtungsanlage, umfasst eine Tragstruktur (20), welche mindestens eine Aufnahmeeinrichtung (34) umfasst, die dazu eingerichtet ist, ein Fahrzeugrad (14) aufzunehmen. Die Tragstruktur (20) ist mittels einer Koppeleinrichtung (22) mittelbar oder unmittelbar mit einem Antriebssystem (24) einer Förderanlage (12) koppelbar. Der Tragvorrichtung (18) ist ein drehfest verankertes Bezugs-Koordinatensystem für Richtungsangaben oben, unten, rechts, links, vorne, hinten und dergleichen zugeordnet und die Tragvorrichtung (18) definiert eine Förderrichtung (86). Die Tragvorrichtung (18) ist für Fahrzeugräder (14) konzipiert, die einen Tiefbettbereich (38) aufweisen und die Aufnahmeeinrichtung (34) ist eingerichtet, in den Tiefbettbereich (38) des Fahrzeugrades (14) einzugreifen und das Fahrzeugrad (14) in der Weise zu lagern, dass es in seinem Tiefbettbereich (38) gehalten wird. Außerdem sind eine Förderanlage (12) und eine Behandlungsanlage (16) für Fahrzeugräder (14) mit solchen Tragvorrichtungen (18) angegeben.

## Beschreibung

### 1. Gebiet der Erfindung

Die Erfindung betrifft eine Tragvorrichtung für Fahrzeugräder, insbesondere für eine Förderanlage zum Fördern von Fahrzeugrädern durch eine Behandlungsanlage, insbesondere durch eine Beschichtungsanlage, mit
a) einer Tragstruktur, welche mindestens eine Aufnahmeeinrichtung umfasst, die dazu eingerichtet ist, ein Fahrzeugrad aufzunehmen;
b) einer Koppeleinrichtung, mittels welcher die Tragstruktur mittelbar oder unmittelbar mit einem Antriebssystem einer Förderanlage koppelbar ist;
   wobei
c) der Tragvorrichtung ein drehfest verankertes Bezugs-Koordinatensystem für Richtungsangaben oben, unten, rechts, links, vorne, hinten und dergleichen zugeordnet ist und die Tragvorrichtung eine Förderrichtung definiert.

Die auf die Tragvorrichtung bezogenen Richtungsangaben orientieren sich dabei an der Ausrichtung der Tragvorrichtung im Betrieb, sollen aber für die Tragvorrichtung auch dann gelten, wenn ihre Lage im Raum geändert wird. Wenn die Tragvorrichtung beispielsweise mit ihrer definierten Rückseite auf einen Boden gelegt wird, weist "oben" bezogen auf die Tragvorrichtung also in eine horizontale Richtung. Die Raumrichtungen horizontal und vertikal bleiben aber entsprechend unabhängig von der Tragvorrichtung.

Außerdem betrifft die Erfindung eine Förderanlage zum Fördern von Fahrzeugrädern mit einem Antriebssystem und einer Vielzahl von Tragvorrichtungen für Fahrzeugräder und eine Behandlungsanlage, insbesondere Beschichtungsanlage, zum Behandeln, insbesondere zum Beschichten und/oder Trocknen, von Fahrzeugrädern (14).

### 2. Beschreibung des Standes der Technik

Tragvorrichtungen der eingangs genannten Art werden bei der Herstellung und insbesondere bei der Lackierung und Oberflächenveredelung oder der Trocknung von Fahrzeugrädern eingesetzt. Damit das Fahrzeugrad ohne Umsetzen auf der Tragvorrichtung alle Behandlungsschritte durchlaufen kann, ist es wünschenswert, dass das Fahrzeugrad an möglichst wenig Stellen kontaktiert wird, da es an solchen Kontaktstellen auch immer gegebenenfalls zu einer Abschattung für Beschichtungsmaterialien und zwangsläufig zu einer Beschädigung der Oberfläche des Fahrzeugrades kommt.

Bei vom Markt bekannten Tragvorrichtungen umfasst die Aufnahmeeinrichtung eine Art Auflagegabel mit Auflagestiften, so dass ein Fahrzeugrad mit einer Reifensitzfläche auf die Auflagestifte und mit dem gegenüberliegenden Felgenhorn auf die Auflagegabel aufgelegt werden kann. Die Auflage ist dabei lose, eine Arretierung an der Tragvorrichtung erfolgt nicht. Fahrzeugräder für kraftstoffbetriebene Fahrzeuge haben in der Regel solche Abmessungen, Gewichte und Schwerpunktlagen, dass diese auch bei einer nur losen Auflage ausreichend lagestabil transportiert werden können.

Insbesondere im Zuge der Verbreitung von Elektrofahrzeugen werden zunehmend Fahrzeugräder gefertigt, die in axiale Richtung gesehen schmal sind. Fahrzeugräder weisen in der Regel nahe an der Sichtseite mehr Material auf, da dort der Lochkreis und die Nabenbohrung eingebracht werden müssen, weshalb der Schwerpunkt bei solch schmalen Fahrzeugräder deutlich nahe an der Sichtseite liegt. Bereits durch ihre geringe axiale Erstreckung und verstärkt durch die Schwerpunktlage sind solche Fahrzeugräder bei den etablierten Aufnahmeeinrichtungen bekannter Tragvorrichtungen aber auch deutlich kippgefährdeter als breitere Fahrzeugräder mit einer größeren axialen Erstreckung. Solche schmalen Fahrzeugräder können bereits bei geringen Erschütterungen und Pendelbewegungen der Tragvorrichtung von der Aufnahmeeinrichtung herunterfallen, was den Produktionsprozess empfindlich stört. Daher müssen kippgefährdete Fahrzeugräder in der Regel manuell mit speziellen Sicherungshaken in der Tragstruktur gesichert werden. Ein automatisiertes Handling zur Auf - und Abnahme wird dadurch ausgeschlossen und es muss eine manuelle Übergabe erfolgen, was wiederum den Gesamtdurchsatz einer Anlage verringert.

Darüber hinaus wird durch die etablierten Aufnahmeeinrichtungen der Reifensitz beansprucht und zerkratzt, so dass dort Materialgrate vorhanden sein können. Diese Grate können wiederum einen aufgezogenen Reifen strapazieren, der am Reifensitz anliegt.

Außerdem sind die bekannten Ausnahmeeinrichtungen in den meisten Fällen für Fahrzeugräder für PKW, also für Personenkraftwagen, geeignet, nicht jedoch für Fahrzeugrädern von LKW, also von Lastkraftwagen. LKW-Fahrzeugräder haben in den meisten Fällen einen stark konischen Reifensitz, weshalb LKW-Fahrzeugräder von Aufnahmeeinrichtungen abrutschen, die mit dem Reifensitz zusammenarbeiten.

### ZUSAMMENFASSUNG DER ERFINDUNG

Es ist Aufgabe der Erfindung, eine Tragvorrichtung, eine Förderanlage und eine Behandlungsanlage der eingangs genannten Art bereitzustellen, welche diesen Gedanken Rechnung tragen.

Diese Aufgabe wird bei einer Tragvorrichtung der eingangs genannten Art dadurch gelöst, dass
d) die Tragvorrichtung für Fahrzeugräder konzipiert ist, die einen Tiefbettbereich aufweisen;
e) die Aufnahmeeinrichtung eingerichtet ist, in den Tiefbettbereich des Fahrzeugrades einzugreifen und das Fahrzeugrad in der Weise zu lagern, dass es in seinem Tiefbettbereich gehalten wird.

In der Praxis haben insbesondere PKW-Fahrzeugräder aus Aluminium, aber auch LKW-Fahrzeugräder ein Felgenbett, bei dem zwischen den gegenüberliegenden Reifensitzen, die jeweils unmittelbar neben den Felgenhörnern an der Sichtseite und der Innenseite des Fahrzeugrades verlaufen, ein Tiefbettbereich des Felgenbettes vorgesehen ist. Allgemein ausgedrückt hat ein Fahrzeugrad im Tiefbettbereich seinen geringsten Außendurchmesser.

Darüber hinaus ist das Tiefbett in der Regel in axialer Richtung näher am Schwerpunkt des Fahrzeugrades als die gegenüberliegenden Reifensitze oder die Felgenhörner.

Wenn die Aufnahmeeinrichtung in den Tiefbettbereich des Fahrzeugrades eingreift, wird die Aufnahme des Fahrzeugrades näher an den Schwerpunkt verlagert, wodurch eine stabilere Lagerung auch von schmalen Fahrzeugrädern erreicht wird. Aber auch LKW-Fahrzeugräder können so lagestabil getragen werden.

Außerdem ist der Tiefbettbereich kein sensibler Teil des Fahrzeugrades und muss nur geringeren Qualitätsanforderungen genügen als die Reifensitze und die Felgenhörner. Es ist daher unwahrscheinlicher als bei der Auflage durch einen Reifensitz und ein Felgenhorn, dass die Qualitätsanforderungen wegen Kratzern oder sonstigen Beeinträchtigungen des Tiefbettbereichs durch die Aufnahmeeinrichtung unterschritten werden.

Es ist daher besonders günstig, wenn die Tragvorrichtung derart eingerichtet ist, dass das Fahrzeugrad ausschließlich in seinem Tiefbettbereich gehalten wird.

Eine effektive Lagerung kann erreicht werden, wenn die Aufnahmeeinrichtung wenigstens drei Lagerelemente umfasst, welche mit dem Tiefbettbereich zusammenarbeiten und welche jeweils eine Kontaktfläche, insbesondere eine punkt- oder linienförmige Kontaktfläche, bereitstellen, um die Außenmantelfläche des Tiefbettbereiche zu kontaktieren.

Vorzugsweise bilden die Lagerelemente in einer Lagerkonfiguration eine formschlüssige Verbindung mit dem Fahrzeugrad aus, welche verhindert, dass das Fahrzeugrad sich in dem Maße bewegt, dass es sich von der Aufnahmeeinrichtung löst.

Dies wird bevorzugt dadurch erreicht, dass die Lagerelemente eine Lagerscheibe sind und/oder als Kontaktfläche eine schneidenartige Außenkante haben.

Es ist besonders günstig, wenn
a) ein erstes Lagerelement auf einer Bewegungsbahn zwischen einer Ruheposition bei unbeladener Tragvorrichtung und einer Lagerposition bei mit einem Fahrzeugrad beladener Tragvorrichtung bewegbar ist;
b) ein zweites Lagerelement auf einer Bewegungsbahn zwischen einer Ruheposition bei unbeladener Tragvorrichtung und einer Lagerposition bei mit einem Fahrzeugrad beladener Tragvorrichtung bewegbar ist.

Auf diese Weise können verschiedene Fahrzeugräder mit unterschiedlichen Durchmessern und damit mit unterschiedlichen Durchmessern im Tiefbettbereich aufgenommen werden. Das dritte Lagerelement ist dabei bevorzugt stationär angeordnet.

### Bevorzugt ist dabei, dass

a) die Bewegungsbahn des ersten Lagerelements und/oder die Bewegungsbahn des zweiten Lagerelements (56.2) linear oder gekrümmt ist;
   und/oder
b) die Bewegungsbahn des ersten Lagerelements (56.1) und/oder die Bewegungsbahn des zweiten Lagerelements jeweils ein Kreisbahnabschnitt (70.1, 70.2) ist;
   und/oder
c) die Bewegungsbahn des ersten Lagerelements (56.1) und die Bewegungsbahn des zweiten Lagerelements in einer gemeinsamen Lagerebene liegen.

Es ist besonders vorteilhaft, wenn das erste Lagerelement und das zweite Lagerelement derart bewegungsgekoppelt sind, dass sie sich zumindest zeitweise gleichzeitig bewegen. Insbesondere in diesem Fall können verschiedene Fahrzeugräder mit unterschiedlichen Durchmessern bzw. mit unterschiedlichen Durchmessern im Tiefbettbereich automatisch bezogen auf die Lagerelemente in deren Lagerposition zentriert werden.

Es ist von Vorteil, wenn das erste Lagerelement und das zweite Lagerelement derart bewegungsgekoppelt sind, dass sich das zweite Lagerelement mit einer Richtungskomponenten nach unten und/oder mit einer Richtungskomponente in Richtung auf eine von unten nach oben und von vorne nach hinten verlaufende Mittelebene der Transportvorrichtung bewegt, wenn sich das erste Lagerelement mit einer Richtungskomponente nach unten bewegt. Insbesondere bei dieser Ausbildung kommt der Vorteil zu tragen, dass die Haltekraft der Lagerelemente, die das Fahrzeugrad kontaktieren, umso größer wird, je mehr Masse das Fahrzeugrad hat.

Es ist von Vorteil, wenn die Koppeleinrichtung derart eingerichtet ist, dass zumindest die Tragstruktur um eine vertikale Schwenkachse verschwenkbar ist. Wenn mit der Förderanlage Neigungsabschnitte mit Steigungen oder Gefällen überwunden werden, verringert sich der Abstand von aufeinanderfolgenden Tragvorrichtungen. Insbesondere in solchen Neigungsabschnitten können dann die Tragstrukturen aus dem Weg gedreht und eine Kollision verhindert.

Für eine automatische Verdrehung in einem Neigungsabschnitt ist es günstig, wenn
a) die Koppeleinrichtung ein Schräggelenk umfasst, so dass die Tragstruktur gelenkig über ein Koppelachse mit dem Antriebssystem verbindbar ist;
b) die Koppelachse gegenüber einer im Betrieb der Tragvorrichtung horizontalen Bezugsebene in einem Achsenwinkel β von weniger als 90° verläuft und bei einer Projektion in diese Bezugsebene gegenüber einer im Betrieb vertikal und parallel zur Förderrichtung verlaufenden Bezugsebene in einem Richtungswinkel γ von mehr als 0° und weniger als 180° verläuft, wobei der Betrag des Richtungswinkels γ in Förderrichtung gemessen wird.

Dabei erfolgt eine größtmögliche Verdrehung abhängig von dem Steigungs- oder Gefällewinkel, wenn der Achsenwinkel β einen Wert von 45° hat.

Bei einer Förderanlage der eingangs genannten Art wird die oben angegebene Aufgabe dadurch gelöst, dass die Tragvorrichtungen mit einigen oder allen der oben erläuterten Merkmale ausgebildet und mit dem Antriebssystem gekoppelt sind.

Bei einer Behandlungsanlage der eingangs genannten Art wird die oben angegebene Aufgabe dadurch gelöst, dass die Behandlungsanlage eine solche Förderanlage zum Fördern von Fahrzeugrädern umfasst.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: einen Streckenabschnitt einer Förderanlage für Fahrzeugräder mit einer Vielzahl von Transportvorrichtungen, mit welcher Fahrzeugräder durch eine Behandlungsanlage gefördert werden;
- Figur 2: eine Draufsicht auf eine Tragvorrichtung;
- Figur 3: eine Seitenansicht die Tragvorrichtung von Figur 3;
- Figur 4A: eine Seitenansicht eines Fahrzeugrades einer ersten Art;
- Figur 4B: eine Seitenansicht eines Fahrzeugrades eine zweiten Art mit gegenüber dem Fahrzeugrad der ersten Art kleineren Axialerstreckung;
- Figur 4C: eine Draufsicht auf die Sichtseite eines Fahrzeugrades mit Lochkreis und Nabenbohrung;
- Figur 5: drei Phasen A, B und C eines Beladevorgangs, bei dem ein Fahrzeugrad auf einer Tragvorrichtung angeordnet wird;
- Figur 6A: eine der Figur 4 entsprechende Seitenansicht der Tragvorrichtung, die mit einem Fahrzeugrad der ersten Art gemäß Figur 2B beladen ist;
- Figur 6B: eine der Figur 4 entsprechende Seitenansicht der Tragvorrichtung, die mit einem Fahrzeugrad der zweiten Art gemäß Figur 2C beladen ist;
- Figur 7: eine Ansicht der Förderanlage in einem Steigungsabschnitt.

### BESCHREIBUNG BEVORZUGTER AUSFÜHRUNGSBEISPIELE

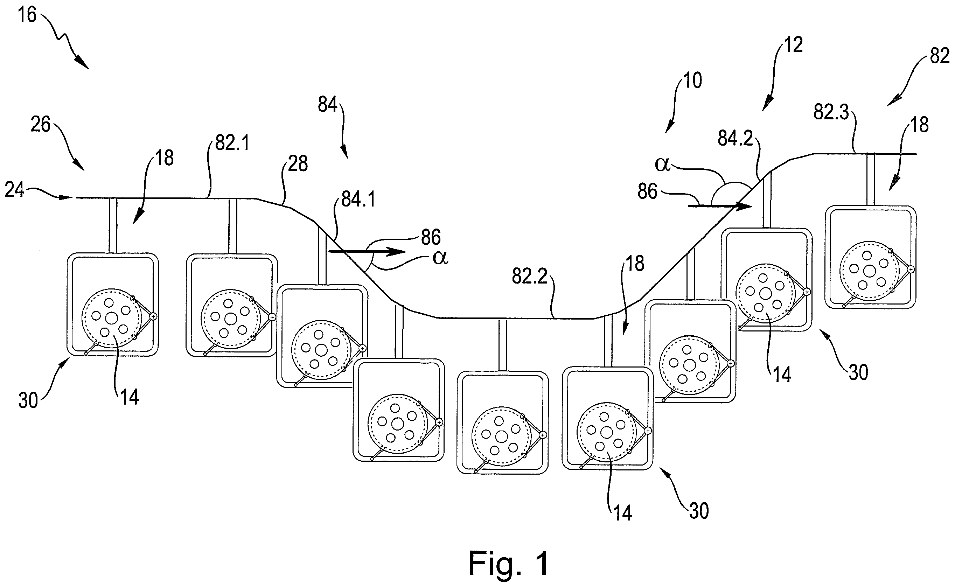

Figur 1 zeigt einen Streckenabschnitt 10 einer Förderanlage 12, mit welcher Fahrzeugräder 14 durch eine insgesamt mit 16 bezeichnete Behandlungsanlage gefördert werden. In den Figuren sind nur einzelne Fahrzeugräder 14 mit einem Bezugszeichen versehen.

In der Behandlungsanlage 16 werden die Fahrzeugräder 14 mit einem Behandlungsmittel behandelt und dabei insbesondere mit einem Beschichtungsmittel, beispielsweise mit einem Lack, beschichtet. Hierfür können einerseits nicht eigens gezeigten Applikationssysteme vorhanden sein oder die Fahrzeugräder 14 werden durch ebenfalls nicht eigens gezeigte Tauchbäder geführt. Alternativ oder ergänzend kann in der Behandlungsanlage 16 die Oberfläche der Fahrzeugräder 14 vor einer Lack-Beschichtung beispielsweise mit einer Phosphatschicht aktiviert werden oder von Verunreinigungen wie Korrosionsprodukten, Schmutzpartikeln, Fetten und/oder Ölen befreit werden. Weiter alternativ oder ergänzend kann die Behandlungsanlage 16 auch als Trocknungsanlage ausgebildet sein oder eine solche umfassen, in welcher die Fahrzeugräder 14 für einen nachfolgenden Behandlungsprozess vorbereitet werden oder in welchen eine bereits aufgebrachte Beschichtung getrocknet bzw. eingebrannt wird.

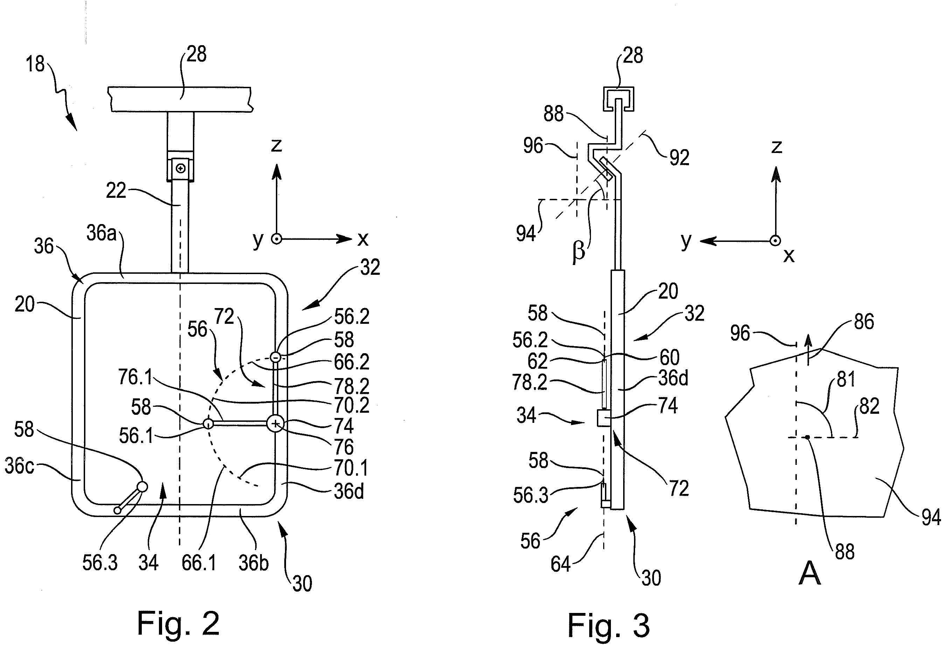

Die Förderanlage 12 umfasst mehrere Transportvorrichtungen 18, welche, wie in den Figuren 2 und 3 in größerem Maßstab zu erkennen ist, jeweils eine Tragstruktur 20 für ein oder mehrere Fahrzeugräder 14 und eine Koppeleinrichtung 22 aufweisen, mittels welcher die Tragstruktur mittelbar oder unmittelbar mit einem Antriebssystem 24 gekoppelt werden kann. Hier ist die Koppeleinrichtung 22 unmittelbar mit der Tragstruktur 20 verbunden.

Der Tragvorrichtung 18 ist ein nur in den Figuren 2 und 3 gezeigtes Bezugs-Koordinatensystem zugeordnet, dass drehfest mit der Transportvorrichtung 18 verankert ist, so dass es sich mit der Transportvorrichtung 18 im Raum mitbewegt. Das Bezugs-Koordinatensystem definiert die Raumrichtungen oben, unten, rechts, links, vorne und hinten für die Transportvorrichtung 18 und dessen Bauteile unabhängig von deren tatsächlicher Ausrichtung im Raum. Bezogen auf das Koordinatensystem und unter Berücksichtigung der Ausrichtung der Transportvorrichtung 18 im Betrieb bedeuten die nachstehend verwendeten Richtungsangaben rechts die positive x-Richtung, vorne die positive y-Richtung und oben die positive z-Richtung. Die Richtungsangaben links, hinten und unten geben somit die jeweils entgegengesetzte Richtung an.

Beim vorliegenden Ausführungsbeispiel ist die Förderanlage 12 als Hängebahnsystem 26 konzipiert und umfasst hierfür eine Führungsschiene 28, in welcher die Transportvorrichtungen 18 geführt sind, die somit als Fördergehänge 30 ausgebildet sind. In diesem Fall ist Koppeleinrichtung 22 oben an der Transportvorrichtung 18 vorgesehen.

Das Antriebssystem 24 kann beispielsweise durch ein an und für sich bekanntes sogenanntes Power&Free-System mit Schleppkette gebildet sein, mit der die Koppeleinrichtungen 22 verbunden sind. Alternativ kann das Antriebssystem 24 auch ein Elektrohängebahn-System mit einzeln und unabhängig voneinander angetriebenen Antriebseinheiten sein, an denen die Koppeleinrichtungen 22 befestigt sind.

Bei einer nicht eigens gezeigten Abwandlung kann die Förderanlage 12 aber auch eine Bodenförderanlage sein, wobei als Antriebssysteme Rollenbahnen, Kettenförderer mit Schleppkette oder schienengebundene oder flurgebundenen autonom ansteuerbaren Transportwagen in Frage kommen. In diesem Fall ist die Koppeleinrichtung 22 unten an der Transportvorrichtung 18 vorgesehen.

Die Tragstruktur 20 der Transportvorrichtungen 18 umfasst eine Grundstruktur 32, an welcher eine Aufnahmeeinrichtung 34 für ein Fahrzeugrad 14 vorgesehen ist. Beim vorliegenden Ausführungsbeispiel ist die Grundstruktur 32 ein geschlossener Tragrahmen 36 mit einem oberen Tragholm 36a, einem unteren Tragholm 36b sowie zwei seitlichen Tragholmen 36c und 36d, der nur in Figur 2 mit Bezugszeichen versehen ist. Auch alternative Konstruktionen der Tragstruktur 20 kommen in Betracht.

Die Transportvorrichtungen 18 sind für Fahrzeugräder 14 konzipiert, die einen Tiefbettbereich 38 aufweisen, der eine Tiefbett-Außenmantelfläche 38a definiert. Die Aufnahmeeinrichtung 34 ist eingerichtet, in den Tiefbettbereich 38 des Fahrzeugrades 14 einzugreifen und das Fahrzeugrad 14 in der Weise zu lagern, dass es in seinem Tiefbettbereich 38 gehalten ist. Bei dem vorliegenden Ausführungsbeispiel wird das Fahrzeugrad 14 dabei ausschließlich in seinem Tiefbettbereich 38 gehalten.

Beim vorliegenden Ausführungsbeispiel ist die Tragstruktur 20 folglich für ein einziges Fahrzeugrad 14 ausgelegt. Wenn die Tragstruktur 20 mehrere Fahrzeugräder 14 aufnehmen soll, sind entsprechend mehrere Aufnahmeeinrichtungen 34 vorhanden.

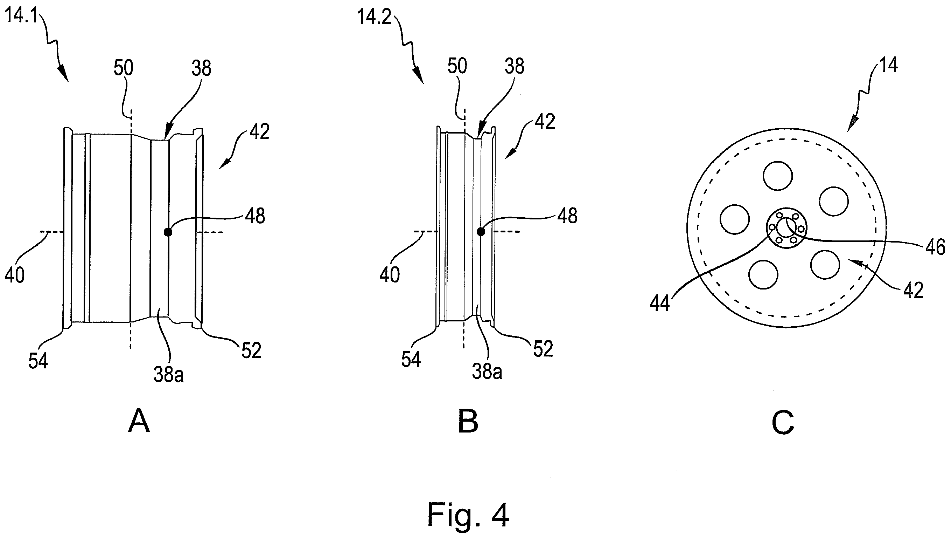

Figur 4 veranschaulicht den grundsätzlichen Aufbau eines Fahrzeugrades 14 mit einem Tiefbettbereich 38 anhand zweier Fahrzeugräder 14.1 und 14.2 mit unterschiedlichen axialen Erstreckungen, die in den Figuren 4A und 4B gezeigt sind. Das Fahrzeugrad 14.2 gemäß Figur 4B illustriert dabei Fahrzeugräder, die bezogen auf ihre Axialerstreckung schmal sind und insbesondere bei Elektro-Personenwagen vermehrt zum Einsatz kommen.

In seinem Tiefbettbereich 38 hat eine Fahrzeugrad 14 seinen kleinsten Außendurchmesser, wobei die Außendurchmesser des Tiefbettbereichs 38 in axialer Richtung nicht konstant sein müssen.

Ein Fahrzeugrad 14 definiert eine Achse 40 und hat stets eine Sichtseite 42, die auch als Designseite bezeichnet wird, mit einem Lochkreis 44. Bei Fahrzeugrädern 14 für Personenkraftwagen ist die Stärke oder Dicke des Materials an der Sichtseite 42 ausreichend groß gewählt, so dass dort eine Nabenbohrung 46 mit Zentrierloch vorhanden sein kann, die eine signifikante Erstreckung in axialer Richtung hat. Durch das dort vorhandene Material ist zudem der Schwerpunkt 48 bei Fahrzeugrädern 14 für Personenkraftwagen bezogen auf eine Mittelebene 50, die senkrecht zur Achse 40 verläuft, in axialer Richtung auf die Sichtseite 42 zu versetzt. Bei Fahrzeugrädern 14 für Lastkraftwagen können die Verhältnisse anders sein, da dort häufig keine Nabenbohrung, sondern lediglich ein Zentrierloch vorhanden ist, weshalb das Material an der Sichtseite 42 entsprechend weniger stark bzw. dick ausgebildet sein muss und ist. Der Schwerpunkt ist bei solchen Fahrzeugrädern eher nahe an deren Mittelebene angesiedelt.

In den Figuren 4A und 4B sind außerdem noch der Vollständigkeit halber das vordere Felgenhorn an der Sichtseite 42 mit 52 und das hintere Felgenhorn an der gegenüberliegenden Seite mit 54 bezeichnet. Zwischen den Felgenhörnern 52 und 54 erstreckt sich das nicht eigens mit einem Bezugszeichen versehene Felgenbett des Fahrzeugrades 14, wobei das Felgenbett des Tiefbettbereichs 38 umfasst.

Die Aufnahmeeinrichtung 34 umfasst drei Lagerelemente 56, und zwar ein erstes Lagerelement 56.1, ein zweites Lagerelement 56.2 und ein drittes Lagerelement 56.3, welche mit dem Tiefbettbereich 38 des Fahrzeugrades 14 zusammenarbeiten.

Die Lagerelemente 56 sind aus einem Material, dass sich auch bei wiederholtem Druck durch den Kontakt mit einem Fahrzeugrad 14 nicht oder nur geringfügig verformt. In der Praxis sind Lagerelemente 56 hierfür aus Metall, insbesondere Stahl, aber auch andere Materialien wie Keramiken oder Kunststoffe kommen in Betracht.

Dabei stellen die Lagerelemente 56 jeweils eine Kontaktfläche 58 bereit, um die Außenmantelfläche 38a des Tiefbettbereichs 38 zu kontaktieren, die punktförmig oder linienförmig und bei zwei unterschiedlichen Lagerelementen 56 auch verschieden ausgebildet sein kann. Eine punktförmige Kontaktfläche 58 wird beispielsweise durch ein kugeliges Lagerelement 56 oder durch ein Lagerelement 56 bereitgestellt, das zumindest einen nach radial außen gewölbten Oberflächenbereich aufweist, der auch durch eine Kontaktspitze gebildet sein kann. Eine linienförmige Kontaktfläche 58 kann durch eine vorzugsweise schneidenartige Außenkante 60 ausgebildet sein, die ihrerseits entweder gerade oder gekrümmt verlaufen kann. Beim vorliegenden Ausführungsbeispiel sind die Lagerelemente 56 jeweils als Lagerscheibe 62 mit entsprechend einer gekrümmten schneidenartigen Außenkante 60 veranschaulicht; die entsprechenden Bezugszeichen sind nur in Figur 3 und dort nur bei dem Lagerelement 56.2 vergeben. Die Lagerscheiben 62 sind hier diskus- oder linsenförmig. Die Lagerscheiben 62 sind außerdem um Ihre nicht eigens gezeigte Scheibenachse verdrehbar gelagert.

Eine solche Außenkante 60 liefert zwar grundsätzlich ebenfalls zunächst eine punktförmige Kontaktfläche 58. Wenn aber ein Fahrzeugrad 14 durch die Lagerelemente 56 gelagert ist, drückt sich deren jeweilige Außenkante 60 in das Material des Fahrzeugrade 14 ein, so dass es zu einem linienförmigen Kontakt des Fahrzeugrades 14 entlang der Außenkante 60 des Lagerelements 56 kommt.

Die drei Lagerelemente 56 der Aufnahmeeinrichtung 34 sind in einer gemeinsamen Lagerebene 64 angeordnet, die sich bei einer mit einem Fahrzeugrad 14 beladenen Tragvorrichtung 18 in Richtung senkrecht zur Achse 40 des Fahrzeugrades 14 erstreckt. Bezogen auf das Bezug-Koordinatensystem verläuft die Lagerebene somit von rechts nach links und beschreibt eine xz-Ebene. Dies veranschaulicht Figur 3.

Ein Lagerelement 56 mit linienförmiger Kontaktfläche 58 ist dabei in der Praxis so angeordnet, dass die linienförmige Kontaktfläche 58 ebenfalls ein dieser Lagerebene 64 angeordnet sind.

Von den drei Lagerelementen 56 sind die beiden ersten Lagerelemente 56.1 und 56.2 bezogen auf die Grundstruktur 32 der Tragstruktur 20 beweglich gelagert, wogegen das dritte Lagerelement 56.3 bezogen auf die Grundstruktur 32 der Tragstruktur 20 stationär angeordnet ist. Bei einer nicht eigens gezeigten Abwandlung ist auch das dritte Lagerelement 56.3 beweglich. Allgemein ausgedrückt sind jedoch mindestens zwei der drei Lagerelemente 56 beweglich.

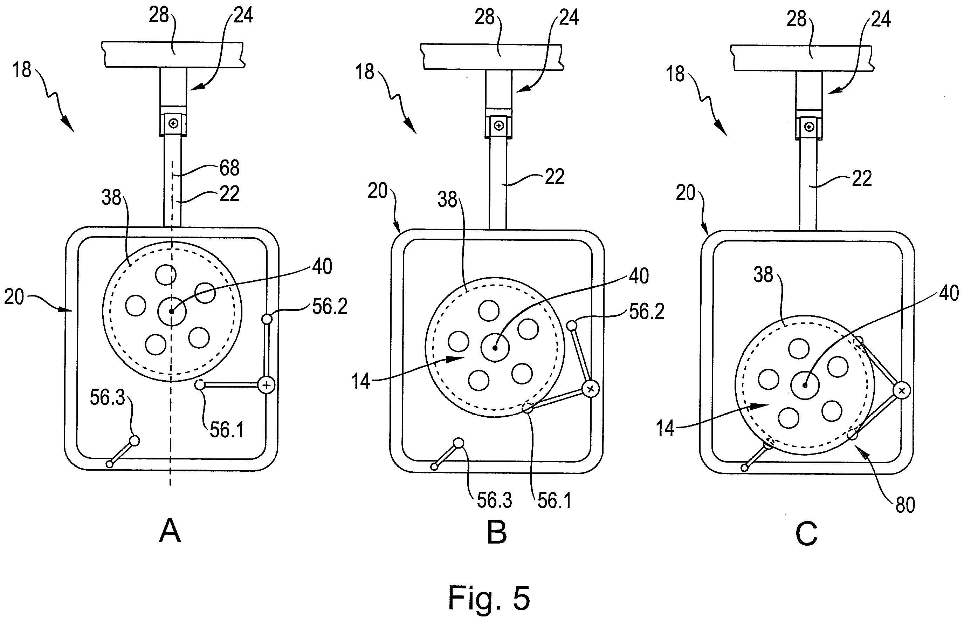

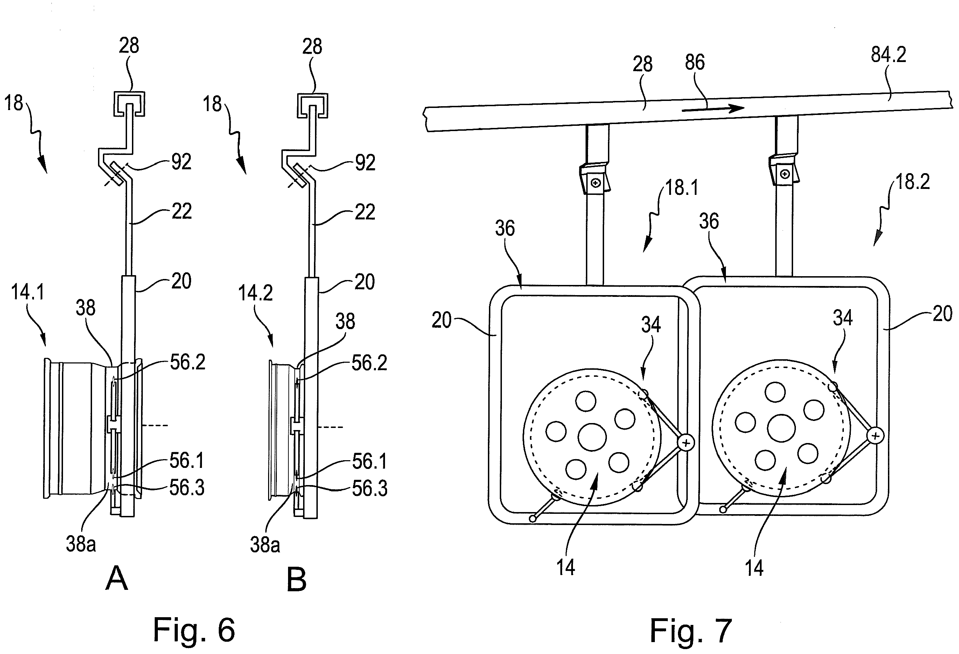

Die beweglichen Lagerelemente 56.1 und 56.2 sind auf jeweils einer Bewegungsbahn 66.1 bzw. 66.2 zwischen jeweils einer Ruheposition und einer Lagerposition beweglich. Die Ruhepositionen sind beispielsweise in den Figuren 2 und 5A zu erkennen, die Lagerpositionen veranschaulichen zum Beispiel Figuren 5C und 7. Wie dort zu erkennen ist, liegen die Ruheposition und die Lagerposition des ersten Lagerelements 56.1 jeweils näher an dem unteren Ende der Grundstruktur 32 als die dann eingenommene Ruheposition bzw. Lagerposition des zweiten Lagerelements 56.2. Figur 5B zeigt einen Zustand dazwischen. Hierauf wird weiter unten nochmals eingegangen.

Grundsätzlich befindet sich das erste bewegliche Lagerelement 56.1 in seiner Ruheposition auf einem vertikalen Höhenniveau, das unter dem vertikalen Höhenniveau des zweiten beweglichen Lagerelements 56.2 in dessen Ruheposition und über dem vertikalen Höhenniveau des dritten, stationären Lagerelements 56.3 liegt. Von unten nach oben betrachtet sind die Lagerelemente 56 folglich in den Ruhepositionen in der Reihenfolge stationäres Lagerelement 56.3, erstes bewegliches Lagerelementen 56.1 und zweites bewegliches Lagerelement 56.2 angeordnet.

In der Lagerposition kann das erste beweglichen Lagerelement 56.1 sich auf einen Höhenniveau befinden, das unter, über oder gleich dem Höhenniveau des stationären Lagerelements 56.3 ist. Das zweite bewegliche Lagerelement 56.2 befindet sich in seiner Lagerposition aber immer auf einem Höhenniveau über dem stationären Lagerelement 56.3.

Sowohl die Ruheposition als auch die Lagerposition beider beweglichen Lagerelemente 56.1 und 56.2 ist von einer in Figur 2 gezeigten Mittelebene 68 der Transportvorrichtung 18 beabstandet. Bei einer mit einem Fahrzeugrad 14 beladenen Transportvorrichtung 18 verläuft diese Mittelebene 68 parallel zur Fahrzeugrad-Achse 40. Bezogen auf das Bezugs-koordinatensystem verläuft die Mittelebene 68 also vertikal und von vorne nach hinten und ist somit eine yz-Ebene; dies zeigt Figur 2.

Das dritte, stationäre Lagerelement 56.3 ist auf der anderen Seite der Mittelebene 68, ebenfalls in einem Abstand zu dieser angeordnet.

Die Bewegungsbahnen 66.1 und 66.2 der Lagerelemente 56.2 und 56.3 liegen vorzugsweise beide in einer gemeinsamen Ebene, vorzugsweise der Lagerebene 64. Die Bewegungsbahnen 66.1 und 66.2 sind gekrümmt. Beim vorliegenden Ausführungsbeispiel folgen beide Bewegungsbahnen 66.1 und 66.2 jeweils einem Kreisbahnabschnitt 70.1 bzw. 70.2. Vorliegend überlappen die beiden Bewegungsbahnen 66.1 und 66.2 bzw. Kreisbahnabschnitte 70.1 und 70.2 bereichsweise. Bei nicht eigens gezeigten Abwandlungen können die Bewegungsbahnen 66.1, 66.2 sich auch kreuzen oder beabstandet voneinander verlaufen. Zudem können auch eine oder beide Bewegungsbahnen 66.1, 66.2 von einer Kreisbahn abweichen und im Extremfall linear verlaufen.

Die beiden beweglichen Lagerelemente 56.1 und 56.2 sind bewegungsgekoppelt. Insbesondere sind die beiden beweglichen Lagerelemente 56.1 und 56.2 derart bewegungsgekoppelt, dass sie sich zumindest zeitweise gleichzeitig bewegen.

Die Bewegungskopplung ist dabei mindestens derart, dass sich das zweite Lagerelement 56.2 mit einer Richtungskomponenten nach unten und/oder in Richtung auf die Mittelebene 68 zu bewegt, wenn sich ersten Lagerelements 56.1 mit einer Richtungskomponente nach unten bewegt. Diese Mittelebene erstreckt sich von vorne nach hinten und beschreibt bei dem Bezugs-Koordinatensystem eine yz-Ebene.

Beim vorliegenden Ausführungsbeispiel ist die Bewegungskopplung auf Grund der gekrümmten Bewegungsbahnen 66.1 und 66.2 derart, dass sich das erste Lagerelement 56.1 mit einer Richtungskomponenten nach unten und mit einer Richtungskomponente von der Mittelebene 68 weg bewegt und sich dabei das zweite Lagerelement 56.2 ebenfalls mit einer Richtungskomponente nach unten, aber zudem mit einer Richtungskomponente auf die Mittelebene 68 zu bewegt.

Beim vorliegenden Ausführungsbeispiel sind die beiden beweglichen Lagerelemente 56.1, 56.2 hierfür von einer Schwenkstruktur 72 getragen, die über ein Drehlager 74 um eine Drehachse 76 senkrecht zur Lagerebene 64 verschwenkbar gelagert ist. Das Drehlager 74 ist dabei seitlich an der Grundstruktur 32 befestigt, bei dem hier gezeigten Ausführungsbeispiel am rechten Tragholm 36d des Tragrahmens 36.

Die Schwenkstruktur 72 umfasst hier einen ersten Schwenkarm 78.1 und einen zweiten Schwenkarm 78.2, die jeweils an einem ihrer Enden drehfest mit dem schwenkbaren Teil des Drehlagers 74 verbunden sind und am jeweils freien Ende jeweils eines der Lagerelemente 56.1 und 56.2 tragen. Die Schwenkarme 78.1 und 78.2 sind im rechten Winkel zueinander angeordnet und haben dieselbe Länge, so dass sich die überlappenden Kreisbahnabschnitte 70.1, 70.2 als Bewegungsbahnen 66.1 bzw. 66.2 ergeben. Bei nicht eigens gezeigten Abwandlungen können die Schwenkarme 78.1 und 78.2 auch andere Winkel als 90° einschließen und/oder unterschiedliche Längen haben und/oder kann das Drehlager 74 auch zwei gesonderte Drehlagereinheiten für die Schwenkstruktur 72 umfassen, von denen jeweils eine jeweils einen Schwenkarm 78.1 bzw. 78.2 verschwenkbar lagert.

Beim vorliegenden Ausführungsbeispiel verläuft der erste Schwenkarm 78.1 mit dem ersten Lagerelement 56.1 in der Ruheposition in einer xy-Ebene, wogegen der zweite Schwenkarm 78.2 mit dem zweiten Lagerelement 56.2 vertikal nach oben verläuft. Alternativ sind aber auch andere Ausrichtungen der Schwenkarme 78.1, 78.2 möglich.

Das Drehlager 74 steht unter Federvorspannung derart, dass die Lagerelemente 56.1 und 56.2 ohne Belastung ihre oben erläuterten Ruhepositionen einnehmen.

Bei allen beschriebenen Ausbildungsvarianten funktioniert die Aufnahmeeinrichtung 34 unabhängig von dem Durchmesser eines Fahrzeugrades 14, das von der Aufnahmeeinrichtung 34 aufgenommen werden kann. Verschiedene Fahrzeugräder 14 mit unterschiedlichen Durchmessern bzw. mit unterschiedlichen Durchmessern im Tiefbettbereich 38 werden dabei automatisch bezogen auf die Lagerelemente in deren Lagerposition fixiert werden.

Die Funktionsweise der Transportvorrichtung 18 wird nun beispielhaft anhand dem in den Figuren konkret gezeigten Ausführungsbeispiel mit Bezug auf die Figuren 2, 5 und 6 beschrieben, wobei die Angaben zu den Ausrichtungen der Komponenten und Bauteile von idealen Bedingungen ausgehen. In der Praxis kann es aber zu tolerierbaren Abweichungen von diesen optimalen Ausrichtungen kommen.

Zum Beladen mit einem Fahrzeugrad 14 befindet sich die unbeladene Transportvorrichtung 18 in einer Beladekonfiguration, in welcher die beweglichen Lagerelemente 56.1 und 56.2 ihre jeweilige Ruheposition einnehmen; diese Beladekonfiguration zeigt Figur 2.

Ein Fahrzeugrad 14 wird nun, beispielsweise mit Hilfe eines Handhabungsroboters, wie er zum Handhaben von Fahrzeugrädern 14 an und für sich bekannt ist, oberhalb des ersten beweglichen Lagerelements 56.1 so positioniert, dass die Fahrzeugrad-Achse 40 nahe oder bevorzugt in der Mittelebene 68 verläuft und dabei horizontal ausgerichtet ist. Dies ist in Figur 5A zu erkennen.

In Richtung der Achse 40 wird das Fahrzeugrad 14 so positioniert, dass der Tiefbettbereich 38 mit den drei Lagerelementen 56 überlappt, wie es Figur 6 zeigt.

Nun wird das Fahrzeugrad 14 in vertikaler Richtung abgesenkt, stößt dann mit der Tiefbett-Außenmantelfläche 38a zunächst gegen das erste bewegliche Lagerelement 56.1 und drückt dieses gegen die Federvorspannung des Drehlagers 74 nach unten. Auf Grund seiner Außenkante 60 drückt sich dabei das erste Lagerelement 56.1 in das Material des Fahrzeugrades 14 im Tiefbettbereich 38.

Wie oben beschrieben, bewegt sich das erste bewegliche Lagerelement 56.1 auf seiner Bewegungsbahn 66.1 nach unten und nach rechts in Richtung von der Mitteleben 68 weg. Dabei bleibt es stets in Kontakt mit dem Fahrzeugrad 14. Durch die Bewegungskopplung bewegt sich das zweite bewegliche Lagerelement 56.2 auf seiner Bewegungsbahn 66.2 auf das Fahrzeugrad 14 zu, bis es gegen die Tiefbett-Außenmantelfläche 38a anstößt und dort ebenfalls in das Material des Fahrzeugrades 14 eindrückt. Auf der Bewegungsbahn 66.1 ist dies eine überlagerte Bewegung nach unten und nach links in Richtung auf die Mittelebene 68 zu. Dies veranschaulicht Figur 5B.

Das Fahrzeugrad 14 wird nun weiter nach unten bewegt, wobei die beiden beweglichen Lagerelemente 56.1 und 56.2 in Kontakt mit dem Fahrzeugrad 14 bleiben, bis das Fahrzeugrad 14 gegen das stationäre Lagerelement 56.3 stößt. Auch das stationäre Lagerelement 56.3 drückt dabei in das Material des Fahrzeugrades 14 ein.

Da die das erste bewegliche Lagerelement 56.1 und das stationäre Lagerelement 56.3 auf gegenüberliegenden Seiten der Mittelebene 68 und bei vorhandenem Fahrzeugrad 14 dabei auch auf gegenüberliegenden Seiten der Achse 40 angeordnet sind, wirkt das Fahrzeugrad 14 mit einer Kraft in Richtung nach rechts unten auf das erste bewegliche Lagerelement 56.1 und mit einer Kraft in Richtung nach links unten auf das stationäre Lagerelement 56.2. Durch die Bewegungskopplung wirkt zugleich das zweite bewegliche Lagerelement 56.2 mit einer Kraft in Richtung nach links unten auf das Fahrzeugrad 14. Das Fahrzeugrad 14 kann sich dabei zunächst auf Grund des gegenwirkenden stationären Lagerelements 56.3 noch ein wenig in Richtung nach rechts unten gegen das erste bewegliche Lagerelement 56.1 bewegen, wobei es gleichsam über das stationäre Lagerelement 56.3 abrollt.

Somit wirkt also das Fahrzeugrad 14 bzw. dessen Gewichtskraft weiter auf das erste bewegliche Lagerelement 56.1, was sich durch die Bewegungskopplung wiederum auf das zweite bewegliche Lagerelement 56.2 auswirkt. Am Ende steht eine Verklemmung des Fahrzeugrades 14 in den drei Lagerelementen 56 und eine Fixierung des Fahrzeugrades 14 gegen eine Bewegung in horizontaler Richtung einerseits und gegen eine Bewegung und gegen ein Verkippen in Richtung der Achse 40 andererseits. Die beweglichen Lagerelemente 56 nehmen nun ihre Lagerpositionen ein, was Figur 5C zeigt.

Dies beschreibt eine Lagerkonfiguration der Lagerelemente 56. Dadurch, dass die Lagerelemente 56 in das Material des Fahrzeugrades 14 eindrücken, ist eine formschlüssige Verbindung 80 der Lagerelemente 56 mit dem Fahrzeugrad 14 ausgebildet, welche verhindert, dass das Fahrzeugrad 14 sich in dem Maße bewegt, dass es sich von der Aufnahmeeinrichtung 34 löst.

Solche Bewegungen des Fahrzeugrades 14 können insbesondere longitudinale Bewegungen des Fahrzeugrades 14 in Richtung seiner Achse 40 oder in Richtungen senkrecht dazu, ein Verkippen des Fahrzeugrades 14 in Richtung seiner Achse 40 oder eine Verdrehung des Fahrzeugrades 14 um seine Achse 40 herum sein.

Durch den Formschluss mit den Lagerelementen 56 sind dabei eine Bewegung und ein Verkippen in Richtung der Achse 40 ausreichend verhindert. Durch die Anordnung der Lagerelemente 56 in Umfangrichtung um die Achse 40 des Fahrzeugrades 14 herum ist außerdem eine Bewegung des Fahrzeugrades 14 in die Richtungen senkrecht zur Achse 40 oder ein Verdrehen des Fahrzeugrades 14 um seine Achse 40 ausreichend unterbunden.

Nun wird das Fahrzeugrad 14 in der Behandlungsanlage 16 behandelt. Hiernach wird das Fahrzeugrad 14 von der Transportvorrichtung 18 entnommen und hierfür zunächst vertikal nach oben bewegt, wobei das Fahrzeugrad 14 von dem stationären Lagerelement 56.3 abgehoben wird und sich die beweglichen Lagerelemente 56.1 und 56.2 wieder in ihre Ruhepositionen bewegen, bis wieder die in Figur 5A gezeigte Ausgangslage erreicht wird.

Dann wird das Fahrzeugrad 14 in axialer Richtung wieder von der Transportvorrichtung 18 entnommen.

Bei nicht eigens gezeigten Abwandlungen kann die Aufnahmeeinrichtung 34 auch mehr als drei Lagerelemente 56 aufweisen, die in den Tiefbettbereich 38 des Fahrzeugrads 14 eingreifen können. Dabei können sowohl weitere stationären Lagerelemente 56 als auch weitere bewegliche Lagerelemente 56 ergänzt sein. Beispielsweise kann eine weitere Schwenkstruktur 72 spiegelbildlich am gegenüberliegenden Tragholm 36c vorgesehen sein. Auch kann unten ein zusätzliches stationäres Lagerelement 56 auf der anderen Seite der Mittelebene 68 angebracht sein, auf welchem das Fahrzeugrad 14 mit der Außenmantelfläche 38a des Tiefbettbereichs 38 aufliegen kann. Bei einer solchen Erhöhung der Anzahl der Lagerelemente 56, was zum Beispiel zu einer Spiegelung einer Ausgangskonfiguration von Lagerelementen 56 führen kann, kann gegebenenfalls das Spektrum von geringen zu größeren Durchmessern erhöht werden, bei denen Fahrzeugräder 14 gelagert werden können.

Wie in Figur 1 veranschaulicht ist, werden Fahrzeugräder 14 gegebenenfalls auch zwischen verschiedenen Höhenniveaus bewegt, weshalb die Führungsschiene 28 exemplarisch mit horizontale Abschnitte 82 in Form von drei horizontalen Abschnitten 82.1, 82.2 und 82.3 auf unterschiedlichen Höhenniveaus gezeigt ist, die durch Neigungsabschnitte 84, hier durch einen Gefälleabschnitt 84.1 und einen Steigungsabschnitt 84.2 verbunden sind. Ein Gefälle und eine Steigung beziehen sich dabei auf die stets eine horizontale Richtung definierende Förderrichtung bzw. auf eine horizontale Bezugsebene, die parallel zur Förderrichtung verläuft, die in Figur 1 durch Pfeile 86 angedeutet ist. Die Förderrichtung 86 ist auch bezogen auf die Tragvorrichtung 18 definiert und soll bei einer Kurvenfahrt als Tangente an die Kurve verstanden werden. Ein Gefälle habe dabei gegenüber der horizontalen Bezugsebene einen negativen Neigungswinkel α und eine Steigung einen positiven Neigungswinkel α.

Wie dort ebenfalls gezeigt ist, ist es für einen hohen Anlagendurchsatz wünschenswert, dass die Transportvorrichtungen 18 mittels der Förderanlage 12 mit kleinstmöglichem Abstand zueinander gefördert werden. Bei einem Hängebahnsystem 26 richten sich die Fördergehänge 30 durch die Schwerkraft stets vertikal aus, wodurch sich in einer Projektion in eine horizontale Ebene der Abstand zwischen zwei Transportvorrichtungen 18 zueinander in den Neigungsabschnitten 84 im Vergleich zu dem Abstand verringert, den die Transportvorrichtungen 18 bei der Bewegung in der Horizontalen haben.

Ohne besondere Maßnahmen muss also der Abstand der Transportvorrichtungen 18 entlang der Führungsschiene 28 so gewählt sein, dass die Transportwagen 18, zumindest aber deren Tragstrukturen 20, auch in einem Neigungsabschnitt 84 in Förderrichtung 86 voneinander beabstandet bleiben.

Wie Figur 1 zeigt, ist dies bei der Förderanlage 12 jedoch nicht der Fall und zwei benachbarte Transportvorrichtungen 18 bzw. deren Tragstrukturen 20 können in einem Neigungsabschnitt 84 in Förderrichtung 86 betrachtet überlappen.

Hierfür ist bei dem Hängebahnsystem 26 die Koppeleinrichtung 22 jedes Transportwagens 18 derart eingerichtet, dass zumindest die Tragstruktur 20 um eine vertikale Schwenkachse 88 verschwenkbar ist. Die vertikale Schwenkachse 88 ist nur in Figur 3 gezeigt.

Für diesen Zweck umfasst die Koppeleinrichtung 22 beim vorliegenden Ausführungsbeispiel ein Schräggelenk 90, so dass die Tragstruktur 22 gelenkig über eine Koppelachse 92 mit dem Antriebssystem 24 verbunden ist. Diese Koppelachse 92 verläuft gegenüber einer im Betrieb horizontalen Bezugsebene 94 in einem Achsenwinkel β von weniger als 90° und bei einer Projektion in diese horizontale Bezugsebene 94 gegenüber einer im Betrieb vertikal und parallel zur Förderrichtung 86 verlaufenden Bezugsebene 96 in einem Richtungswinkel γ von mehr als 0° und weniger als 180° verläuft, wobei der Betrag des Richtungswinkels γ in Förderrichtung 86 gemessen wird. Dies zeigt Figur 3, wobei Figur 3A die Projektion in die horizontale Bezugsebene 94 zeigt.

Die Koppelachse 92 ist in den Figuren 3 und 6 zu erkennen; die Bezugsebenen 94 und 96 sind nur in Figur 3 veranschaulicht. In einem horizontalen Schienenabschnitt 82 beträgt beim vorliegenden Ausführungsbeispiel der Achsenwinkel β 45° und der Richtungswinkel γ 90°. Der Achsenwinkel β und der Richtungswinkel γ ändern sich abhängig von dem Neigungswinkel α des Neigungsabschnittes 84.

Beim vorliegenden Ausführungsbeispiel wird der Richtungswinkel γ der Koppelachse 92 kleiner, wenn die Transportvorrichtung 18 in einen Gefälleabschnitt 84,1 mit negativem Neigungswinkel α einfährt, und die Transportvorrichtung 18 dreht sich von oben gesehen gegen den Uhrzeigersinn. Wenn die Transportvorrichtung 18 in einen Steigungsabschnitt 84.2 mit positivem Neigungswinkel α einfährt, wird der Richtungswinkel γ der Koppelachse 92 größer und die Transportvorrichtung 18 dreht sich von oben gesehen im Uhrzeigersinn.

Figur 7 illustriert dies nochmals bei einer Steigungsfahrt in einem Steigungsabschnitt 84.2 mit einem kleineren Neigungswinkel α als in Figur 1. Bei dieser Darstellung sind zwei Transportvorrichtungen 18.1 und 18.2 gezeigt, wobei der Tragrahmen 36 der Transportvorrichtung 18.1 in der Papierebene angeordnet sei und die Draufsicht auf die Transportvorrichtung 18.1 gemäß Figur 2 erhalten bleibt. In Figur 7 ragt dann die Führungsschiene 28 links nach vorne und rechts nach hinten aus der Papierebene hinaus, was zugleich die Förderrichtung 86 beschreibt. Die zweite Transportvorrichtung 18.2 befindet sich dann hinter der Papierebene. Beide Transportvorrichtungen 18.1 und 18.2 sind gegenüber ihrer Ausgangslage in einem horizontalen Abschnitt 82 von oben betrachtet im Uhrzeigersinn verdreht.

## Patentansprüche

1. Tragvorrichtung für Fahrzeugräder (14), insbesondere für eine Förderanlage (12) zum Fördern von Fahrzeugrädern (14) durch eine Behandlungsanlage (16), insbesondere durch eine Beschichtungsanlage, mit
a) einer Tragstruktur (20), welche mindestens eine Aufnahmeeinrichtung (34) umfasst, die dazu eingerichtet ist, ein Fahrzeugrad (14) aufzunehmen;
b) einer Koppeleinrichtung (22), mittels welcher die Tragstruktur (20) mittelbar oder unmittelbar mit einem Antriebssystem (24) einer Förderanlage (12) koppelbar ist;
wobei
c) der Tragvorrichtung (18) ein drehfest verankertes Bezugs-Koordinatensystem für Richtungsangaben oben, unten, rechts, links, vorne, hinten und dergleichen zugeordnet ist und die Tragvorrichtung (18) eine Förderrichtung (86) definiert;
**dadurch gekennzeichnet, dass**
d) die Tragvorrichtung (18) für Fahrzeugräder (14) konzipiert ist, die einen Tiefbettbereich (38) aufweisen;
e) die Aufnahmeeinrichtung (34) eingerichtet ist, in den Tiefbettbereich (38) des Fahrzeugrades (14) einzugreifen und das Fahrzeugrad (14) in der Weise zu lagern, dass es in seinem Tiefbettbereich (38) gehalten wird.

2. Tragvorrichtung nach Anspruch 1, **dadurch gekennzeichnet, dass** die Tragvorrichtung derart eingerichtet ist, dass das Fahrzeugrad (14) ausschließlich in seinem Tiefbettbereich (38) gehalten wird.

3. Tragvorrichtung nach Anspruch 1 oder 2, **dadurch gekennzeichnet, dass** die Aufnahmeeinrichtung (34) wenigstens drei Lagerelemente (56) umfasst, welche mit dem Tiefbettbereich (38) zusammenarbeiten und welche jeweils eine Kontaktfläche (58), insbesondere eine punkt- oder linienförmige Kontaktfläche (58), bereitstellen, um die Außenmantelfläche (38a) des Tiefbettbereiche (38) zu kontaktieren.

4. Tragvorrichtung nach Anspruch 3, **dadurch gekennzeichnet, dass** die Lagerelemente (56) in einer Lagerkonfiguration eine formschlüssige Verbindung mit dem Fahrzeugrad (14) ausbilden, welche verhindert, dass das Fahrzeugrad (14) sich in dem Maße bewegt, dass es sich von der Aufnahmeeinrichtung (34) löst.

5. Tragvorrichtung nach Anspruch 3 oder 4, **dadurch gekennzeichnet, dass** ein oder mehrere Lagerelemente (56) eine Lagerscheibe (62) sind und/oder als Kontaktfläche (58) eine schneidenartige Außenkante (60) haben.

6. Tragvorrichtung nach einem der Ansprüche 3 bis 5, **dadurch gekennzeichnet, dass**
a) ein erstes Lagerelement (56.1) auf einer Bewegungsbahn (66.1) zwischen einer Ruheposition bei unbeladener Tragvorrichtung (18) und einer Lagerposition bei mit einem Fahrzeugrad (14) beladener Tragvorrichtung (18) bewegbar ist;
b) ein zweites Lagerelement (56.2) auf einer Bewegungsbahn (66.2) zwischen einer Ruheposition bei unbeladener Tragvorrichtung (18) und einer Lagerposition bei mit einem Fahrzeugrad (14) beladener Tragvorrichtung (18) bewegbar ist.

7. Tragvorrichtung nach Anspruch 6, **dadurch gekennzeichnet, dass**
a) die Bewegungsbahn (66.1) des ersten Lagerelements (56.1) und/oder die Bewegungsbahn (66.2) des zweiten Lagerelements (56.2) linear oder gekrümmt ist;
und/oder
b) die Bewegungsbahn (66.1) des ersten Lagerelements (56.1) und/oder die Bewegungsbahn (66.2) des zweiten Lagerelements (56.2) jeweils ein Kreisbahnabschnitt (70.1, 70.2) ist;
und/oder
b) die Bewegungsbahn (66.1) des ersten Lagerelements (56.1) und die Bewegungsbahn (66.2) des zweiten Lagerelements (56.2) in einer gemeinsamen Lagerebene (64) liegen.

8. Tragvorrichtung nach einem der Ansprüche 5 bis 7, **dadurch gekennzeichnet, dass** das erste Lagerelement (56.1) und das zweite Lagerelement (56.2) derart bewegungsgekoppelt sind, dass sie sich zumindest zeitweise gleichzeitig bewegen.

9. Tragvorrichtung nach Anspruch 8, **dadurch gekennzeichnet, dass** das erste Lagerelement (56.1) und das zweite Lagerelement (56.2) derart bewegungsgekoppelt sind, dass sich das zweite Lagerelement (56.2) mit einer Richtungskomponenten nach unten und/oder mit einer Richtungskomponente in Richtung auf eine von unten nach oben und von vorne nach hinten verlaufende Mittelebene (68) der Transportvorrichtung (18) bewegt, wenn sich das erste Lagerelement (56.1) mit einer Richtungskomponente nach unten bewegt.

10. Tragvorrichtung nach einem der Ansprüche 1 bis 10, **dadurch gekennzeichnet, dass** die Koppeleinrichtung (22) derart eingerichtet ist, dass zumindest die Tragstruktur 20 um eine vertikale Schwenkachse (88) verschwenkbar ist.

11. Tragvorrichtung nach Anspruch 10, **dadurch gekennzeichnet, dass**
a) die Koppeleinrichtung (22) ein Schräggelenk (90) umfasst, so dass die Tragstruktur (22) gelenkig über ein Koppelachse (92) mit dem Antriebssystem (24) verbindbar ist;
b) die Koppelachse gegenüber einer im Betrieb horizontalen Bezugsebene (94) in einem Achsenwinkel β von weniger als 90° verläuft und bei einer Projektion in diese Bezugsebene (94) gegenüber einer im Betrieb vertikal und parallel zur Förderrichtung (86) verlaufenden Bezugsebene (96) in einem Richtungswinkel γ von mehr als 0° und weniger als 180° verläuft, wobei der Betrag des Richtungswinkels γ in Förderrichtung (86) gemessen wird.

12. Tragvorrichtung nach Anspruch 11, **dadurch gekennzeichnet, dass** der Achsenwinkel β einen Wert von 45° hat.

13. Förderanlage zum Fördern von Fahrzeugrädern (14) mit einem Antriebssystem (24) und einer Vielzahl von Tragvorrichtungen (18) für Fahrzeugräder (14),
**dadurch gekennzeichnet, dass**
die Tragvorrichtungen (18) nach einem der Ansprüche 1 bis 12 ausgebildet und mit dem Antriebssystem (24) gekoppelt sind.

14. Behandlungsanlage, insbesondere Beschichtungsanlage, zum Behandeln, insbesondere zum Beschichten und/oder Trocknen, von Fahrzeugrädern (14), mit einer Förderanlage (12) zum Fördern von Fahrzeugrädern (14) nach Anspruch 13.
